# EUROPÄISCHE PATENTANMELDUNG

(11) **EP 2 019 492 A2**
(43) Veröffentlichungstag der Anmeldung: **28.01.2009**
(21) Anmeldenummer: 08012467.0
(22) Anmeldetag: 10.07.2008
(51) Int. Cl.: H04B 1/16, H04B 1/40

(54) **Verfahren und Vorrichtung zum stromsparenden Betrieb von RFID-Datenträgern**

(30) Priorität: 25.07.2007 DE 102007034592
(71) Anmelder: Identec Solutions AG, 6890 Lustenau (AT)
(72) Erfinder: Gantner, Reinhold, 6700 Bludenz (AT); Feierle, Karl-Heinz, 6850 Dornbirn (AT)
(74) Vertreter: Riebling, Peter

(57) **Zusammenfassung**

Die Erfindung betrifft ein Verfahren und eine Vorrichtung zum stromsparenden Betrieb von RFID-Datenträgern, wobei der RFID-Datenträger eine Sende- und Empfangsantenne aufweist, über welche Daten zu oder von einer Sende-Leseeinheit mittels einem Funksignal innerhalb eines Sendefeldes gesendet bzw. empfangen werden, wobei der Datenträger für einen stromsparenden Schlafmodus ausgebildet ist und mittels einem Wecksignal in den Empfangsmodus wechselt.

Das Verfahren ist dadurch gekennzeichnet, mit der Übermittlung des Wecksignals zeitgleich eine Zeitinformation an den Datenträger übertragen wird, wobei die Zeitinformation diejenige Zeit aufweist, welche angibt, wie viel Zeit noch bis zur Übermittlung eines Befehles verstreichen muss.

Die Vorrichtung ist dadurch gekennzeichnet, dass der mit einem Schlafmodus ausgebildete Datenträger mittels einem Aufwecksignal in einen Empfangsmodus wechselt, wobei das Aufwecksignal zusätzlich eine Zeitinformation aufweist, welche eine Abwärtszählzeit ausbildet und den Datenträger nach deren Ablauf kurzzeitig in den Empfangsmodus schaltet, wodurch der Datenträger einen Befehl empfängt.

## Beschreibung

Die Erfindung betrifft ein Verfahren und eine Vorrichtung zum stromsparenden Betrieb von RFID-Datenträgern nach dem Oberbegriff des Patentanspruches 1.

Ein stromsparender Betrieb von Datenträgern ist beispielsweise mit dem Gegenstand der DE 103 30 451 B3 bekannt geworden, bei der ein Weckbefehl von einem Steuergerät an einen Datenträger ausgesendet wird, damit dieser in einen Aufwachzustand gelangt und bereit ist, entsprechende Signale von dem Steuergerät zu empfangen.
Damit besteht der Vorteil, dass der Datenträger lediglich relativ hohen Strom verbraucht, wenn er den Weckbefehl tatsächlich empfangen hat.

Nachteil der bekannten Anordnung ist allerdings, dass der Weckbefehl den Datenträger immer sofort in einen Wachzustand versetzt und ihn somit bereit macht, die entsprechenden Signale des Steuergerätes zu empfangen. Hierbei wird beim Stand der Technik vorausgesetzt, dass die Länge des Aufwecksignals länger ist als die sogenannte Sniff-Periode.
Unter Sniff-Periode werden ein impulsweises Aufwecken und ein impulsweiser Empfangsmodus des RFID-Datenträgers verstanden.

Bei entsprechend dieser Erfordernis ist es erforderlich, dass die Länge des Wecksignals länger ist als eine Sniff-Periode. Damit wird sichergestellt, dass während des impulsweisen Empfangsbetriebes jedenfalls einmal ein Wecksignal empfangen werden kann.

Nun gehört zum Stand der Technik auch die Tatsache, dass nach Ablauf des Wecksignals auch der Befehl selbst am Ende des Wecksignals gesendet wird. Während dieser Zeit muss - beim Stand der Technik - der Datenträger in Empfangsbereitschaft sein, was unnötig Strom verbraucht. Er muss also während des gesamten Weckbefehls und noch zusätzlich während der Übermittlung des eigentlichen Befehls im Wachzustand verbleiben, was unnötigerweise Batteriestrom verbraucht.

Der Erfindung liegt deshalb die Aufgabe zugrunde, ein Verfahren und eine Vorrichtung zum stromsparenden Betrieb eines RFID-Datenträgers nach dem Oberbegriff des Anspruches 1 so weiterzubilden, dass der Stromverbrauch wesentlich gesenkt werden kann.

Zur Lösung der gestellten Aufgabe ist ein Verfahren dadurch gekennzeichnet, dass mit der Übermittlung des Wecksignals zeitgleich eine Zeitinformation an den Datenträger übertragen wird, wobei die Zeitinformation diejenige Zeit aufweist, welche angibt, wie viel Zeit noch bis zur Übermittlung eines Befehles verstreichen muss.
Es handelt sich also um eine Countdown-Zeit, was bedeutet, dass der Datenträger nun weiß, dass er nach Empfang des Wecksignals nicht sofort aufwachen muss, sondern er weiß, dass beispielsweise 2 bis 200 ms später der eigentliche, auszuwertende Befehl kommt.

Hier ist nun wichtig, dass eben nicht ein Wachzustand während des gesamten Weckbefehls erhalten wird, sondern dass der Weckbefehl nur eine Zeitinformation umfasst, so dass der Datenträger nun aufgrund der Auswertung dieser Zeitinformation feststellt, wann er nun wirklich in den Empfangsmodus gehen muss.
Die Zeit vom Eintreffen des Weckbefehls mit der Übermittlung der Zeitinformation bis zum Empfang des eigentlichen Befehls kann im Stromsparmodus verbracht werden, was wesentlichen Batteriestrom spart.

Hier liegt ein wesentlicher Vorteil gegenüber dem Stand der Technik, weil beim Stand der Technik während des gesamten Weckbefehls der Datenträger in einem stromverbrauchenden Empfangszustand war, was bei der Erfindung vermieden wird.

Es wird ein Stromfaktor der Einsparung von Strom im Bereich von 50 bis 200 eines normalen Stromverbrauches eines Datenträgers nach dem Stand der Technik erreicht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Anordnung einer Sende-Leseeinheit mit einem Datenträger
- Figur 2:: das Stromdiagramm einer Sende-Leseeinheit
- Figur 3:: das Stromdiagramm eines Datenträgers nach dem Stand der Technik
- Figur 4:: das Stromdiagramm eines Datenträgers nach der Erfindung

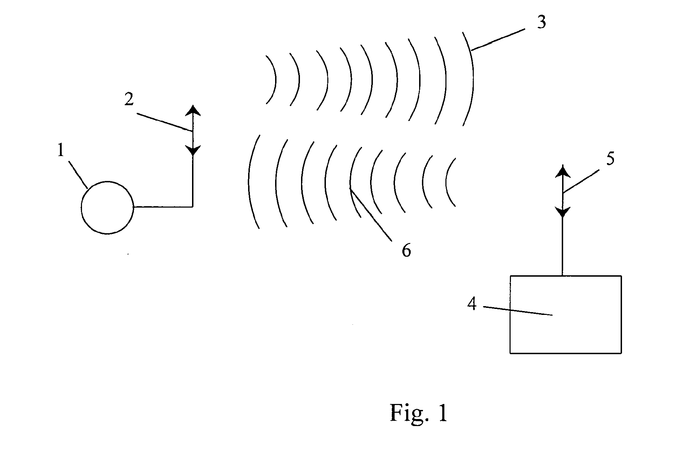

In Figur 1 stellt allgemein dar, dass eine Sende-Leseeinheit 1 mit einer Sende-Empfangsantenne 2 ausgerüstet ist und ein entsprechendes Sendefeld 3 zu mindestens einem Datenträger 4 sendet, der seinerseits mit einer Sende-Empfangsantenne 5 ausgerüstet ist. Diese Antenne sendet deshalb ein Sendefeld 6, welches wiederum von der Sende-Empfangsantenne 2 der Sende-Leseeinheit 1 empfangen und ausgewertet wird.

Es ist selbstverständlich möglich, dass statt der Anordnung in Figur 1 die Sende-Leseeinheit eine Vielzahl von Datenträgern 4 mit Signalen beaufschlagt, die dementsprechend auch mit einer Vielzahl von Sendefeldern 6 antworten.

Der Einfachheit halber wird jedoch nur die Kommunikation zwischen einer Sende-Leseeinheit und einem einzigen Datenträger 4 näher beschrieben.

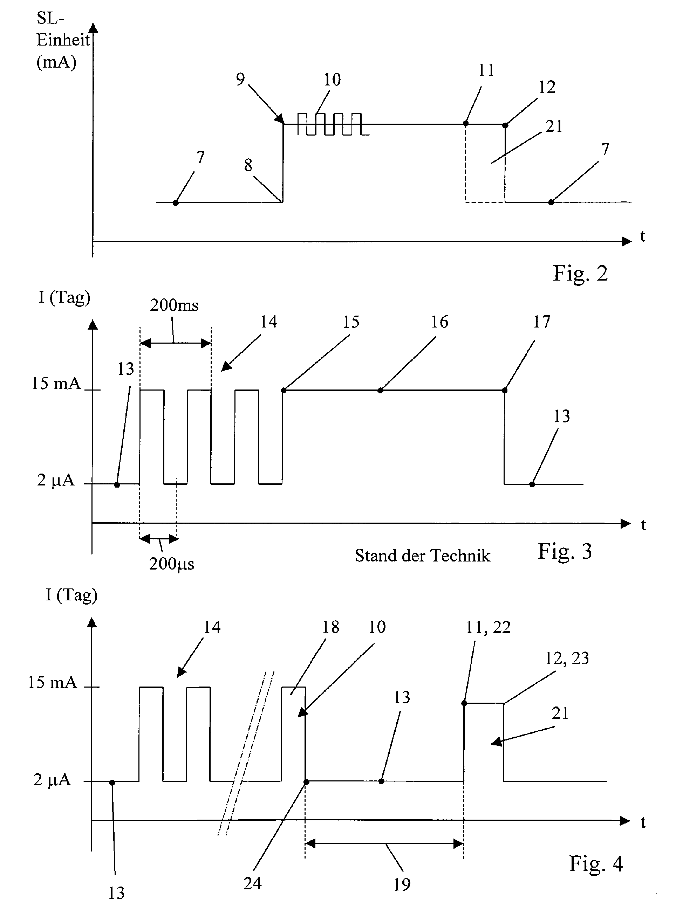

In Figur 2 ist erkennbar, dass das Stromdiagramm der Sende-Leseeinheit 1 darin besteht, dass zunächst ausgehend von einem Ruhemodus 7 bei Position 8 zunächst ein Aufwecksignal 9 über das Sendefeld 3 ausgesendet wird und dieses Aufwecksignal würde für eine relativ lange Zeitdauer bis zur Position 11 aufrecht erhalten bleiben, bis im Zwischenraum zwischen Position 11 und Position 12 der eigentliche Befehl 21 an den Datenträger 4 übermittelt wird.

Nach der Übermittlung des Befehles 21 wird die Sende-Leseeinheit bei Position 12 wieder in den Ruhemodus 7 gebracht.

In Figur 3 ist erkennbar, wie ein nach dem Stand der Technik aufgebauter Datenträger 4 darauf reagiert.

Zunächst einmal wird ausgehend von einem Schlafmodus 13 ein sogenannter Sniff-Modus durchgeführt. Dies bedeutet, dass im Bereich von etwa einer Zeitdauer von 200 µs kurzzeitig in den Empfangsmodus geschaltet wird und dass die Periodendauer derartiger kurzzeitiger Empfangsschaltungen etwa 200 ms beträgt.

Wichtig ist, dass der Sniff-Modus solange fortgesetzt wird, dass mindestens ab der Position 8 das Aufwecksignal 9 empfangen werden kann. Sobald dieses Aufwecksignal 9 im Bereich des Empfangsmodus 14 mindestens einmal empfangen wurde, geht der Stromverbrauch des Datenträgers (4) nach dem Stand der Technik stark in die Höhe und verbleibt zwischen der Position 15 und der Position 17 in einem Dauer-Empfangsmodus 16, der sehr viel Strom verbraucht.

Erst vor Erreichen der Position 17 wird der eigentliche Befehl 21 empfangen und nach dem Empfang dieses Befehles geht dann der Stromverbrauch des Datenträgers nach dem Stand der Technik wieder in den Schlafmodus 13 zurück.

Hier setzt die Erfindung ein, die im Prinzip den gleichen kurzzeitigen Empfangsmodus 14 gemäß Figur 4 mit einem Datenträger 4 nach der Erfindung durchführt, nur dass jetzt erfindungsgemäß mit dem Aufwecksignal 9 eine Zeitinformation 10 übertragen wird.

Inhalt dieser Zeitinformation 10 ist eine sogenannte Countdown-Zeit, was bedeutet, dass dem Datenträger 4 mitgeteilt wird, dass nach Ablauf der Abwärtszählzeit 19 erst der eigentliche Befehl 21 übertragen wird. Dass heißt, ab der Position 24 bis zur Position 22 kann der Datenträger noch im Schlafmodus 13 verbringen, weil er ja genau weiß, wann er punktgenau aufwachen muss. Dies war beim Stand der Technik nicht der Fall, denn dort war ein Dauer-Empfangsmodus 16 gegeben.

Es wird also in der Abwärtszählzeit 19, deren Dauer mit der Zeitinformation 10 mitgeteilt wird, in den Schlafmodus 13 geschaltet oder es wird dort verblieben, so dass erst nach Ablaufen der Abwärtszählzeit 19 in den stromverbrauchenden Empfangsmodus 14 bei Position 22 geschaltet wird und nur während dieser kurzen Empfangszeit bis zur Position 23 der eigentliche Befehl 21 empfangen wird.

Hier ist also ein wesentlicher Vorteil, dass während der Abwärtszählzeit 19 ein stromsparender Betrieb vorgesehen ist, was beim Stand der Technik nicht der Fall war.

Wichtig ist, dass mindestens einmal, nämlich nach Position 18, ein Empfangsmodus 14 im Bereich des Aufwecksignals 9 sein muss, damit überhaupt das Vorhandensein des Aufwecksignals 9 von dem Datenträger 4 erkannt wird.

Bei der vorliegenden Erfindung wird also eine wesentliche Stromeinsparung erreicht, was beim Stand der Technik nicht gegeben war.

### Zeichnungslegende

- 1: Sende-Leseeinheit
- 2: Sende-Empfangsantenne
- 3: Sendefeld
- 4: Datenträger
- 5: Sende-Empfangsantenne
- 6: Sendefeld
- 7: Ruhemodus
- 8: Position
- 9: Aufwecksignal
- 10: Zeitinformation
- 11: Position
- 12: Position
- 13: Schlafmodus
- 14: Empfangsmodus
- 15: Position
- 16: Dauer-Empfangsmodus
- 17: Position
- 18: Position
- 19: Abwärtszählzeit
- 20: Position
- 21: Befehl
- 22: Position
- 23: Position
- 24: Position

## Patentansprüche

1. Verfahren zum stromsparenden Betrieb von RFID-Datenträgern, wobei der RFID-Datenträger eine Sende- und Empfangsantenne aufweist, über welche Daten zu oder von einer Sende-Leseeinheit mittels einem Funksignal innerhalb eines Sendefeldes gesendet bzw. empfangen werden, wobei der Datenträger für einen stromsparenden Schlafmodus ausgebildet ist und mittels einem Wecksignal in den Empfangsmodus wechselt, **dadurch gekennzeichnet, dass** mit der Übermittlung des Wecksignals (9) zeitgleich eine Zeitinformation (10) an den Datenträger (4) übertragen wird, wobei die Zeitinformation (10) diejenige Zeit aufweist, welche angibt, wie viel Zeit noch bis zur Übermittlung eines Befehles verstreichen muss.

2. Verfahren nach Anspruch 1, **dadurch gekennzeichnet, dass** der Datenträger (4) nach dem Empfang der Zeitinformation (10) zu einem späteren Zeitpunkt aufwacht, beispielsweise 2 bis 200 ms später, wenn der eigentliche, auszuwertende Befehl kommt, wobei die Zeitinformation (10) als eine Countdown-Zeit ausgebildet ist.

3. Verfahren nach einem der vorhergehenden Ansprüche 1 bis 2, **dadurch gekennzeichnet, dass** die Sende-Leseeinheit (1) im Ruhemodus (7) (siehe Fig. 1, Pos. 8) über das Sendefeld (3) ein Aufwecksignal (9) an den Datenträger (4) aussendet, wobei das Aufwecksignal (9) für eine relativ lange Zeitdauer aufrecht erhalten bleibt (siehe Fig. 1, zwischen Pos. 9 und Pos. 11) bis der Datenträger (4) einen Befehl (21) erhält (siehe Fig. 1, zwischen Pos. 11 und Pos. 12).

4. Verfahren nach einem der vorhergehenden Ansprüche 1 bis 3, **dadurch gekennzeichnet, dass** der Datenträger (4) nach Erhalt des Befehls (21) wieder in den Ruhemodus (7) wechselt (siehe Fig. 1, Pos. 7).

5. Verfahren nach einem der vorhergehenden Ansprüche 1 bis 4, **dadurch gekennzeichnet, dass** der Datenträger (4) ausgehend von einem Schlafmodus (13) einen Sniff-Modus ausführt, wobei der Sniff-Modus den Datenträger (4) innerhalb einer Zeitdauer von zum Beispiel 200 µs kurzzeitig in den Empfangsmodus (14) schaltet, wobei das kurzzeitige Schalten in den Empfangsmodus (14) periodisch ist und andauert, bis das Aufwecksignal (9) einmal vom Datenträger (4) empfangen wird (siehe Fig. 1, Pos. 8).

6. Verfahren nach einem der vorhergehenden Ansprüche 1 bis 5, **dadurch gekennzeichnet, dass** nach dem Empfang des Aufwecksignals (9) im Bereich des Empfangsmodus (14) der Datenträger (4) in einen Dauer-Empfangsmodus (16) wechselt (siehe Fig. 2, zwischen Pos. 15 und Pos. 17) und mittels Empfang des Befehls (21) (siehe Fig. 2, bei Pos. 17) in den Schlafmodus (13) zurück wechselt.

7. Verfahren nach einem der vorhergehenden Ansprüche 1 bis 6, **dadurch gekennzeichnet, dass** nach dem Senden der Zeitinformation (10) der Datenträger (4) entsprechend der Zeitinformation (10) im Schlafmodus (13) verbleibt, welche als Abwärtszählzeit (19) ausgebildet ist (siehe Fig. 4, Pos. 24 bis Pos. 22) und nach Ablauf der Abwärtszählzeit (19) der Datenträger kurzzeitig in den Empfangsmodus (14) schaltet und der Befehl (21) übertragen wird (siehe Fig. 4, Pos. 22 bis Pos. 23).

8. Verfahren nach einem der vorhergehenden Ansprüche 1 bis 7, **dadurch gekennzeichnet, dass** die Abwärtszählzeit (19) im Vergleich zum Empfangsmodus (14) einen relativ geringen Stromverbrauch aufweist.

9. Vorrichtung zur Ausführung des Verfahrens nach den vorhergehenden Ansprüchen 1 bis 8, **dadurch gekennzeichnet, dass** der mit einem Schlafmodus (14) ausgebildete Datenträger (4) mittels einem Aufwecksignal (9) in einen Empfangsmodus (14) wechselt, wobei das Aufwecksignal (9) zusätzlich eine Zeitinformation (10) aufweist, welche eine Abwärtszählzeit (19) ausbildet und den Datenträger (4) nach deren Ablauf kurzzeitig in den Empfangsmodus (14) schaltet, wodurch der Datenträger (4) einen Befehl (21) empfängt.
